# EUROPEAN PATENT APPLICATION

(11) **EP 4 674 559 A1**
(43) Date of publication of application: **07.01.2026**
(21) Application number: 24824741.3
(22) Date of filing: 21.11.2024
(51) Int. Cl.: B23K 26/21, B23K 26/70

(54) **CONVEYING APPARATUS AND WELDING DEVICE**

(30) Priority: 11.05.2024 CN 202410586684; 11.05.2024 CN 202421021792 U; 11.05.2024 CN 202421025938 U
(71) Applicant: Wuxi Lead Intelligent Equipment Co., Ltd., Wuxi, Jiangsu 214028 (CN)
(72) Inventor: HUANG, Shaobo, Wuxi, Jiangsu 214028 (CN); DONG, Benchang, Wuxi, Jiangsu 214028 (CN); ZHANG, Xingyang, Wuxi, Jiangsu 214028 (CN)
(74) Representative: Rau, Schneck & Hübner Patentanwälte Rechtsanwälte PartGmbB
(86) International application number: PCT/CN2024/133579
(87) International publication number: WO 2025/236588

(57) **Abstract**

Disclosed are a conveying device and a welding apparatus. Here, the conveying device has a loading station and a processing station, and comprises: a positioning mechanism defining an accommodating space suitable for accommodating a workpiece and provided with a movable driving part; a conveying mechanism configured to convey the positioning mechanism from the loading station to the processing station; and a driving mechanism provided at the loading station and configured to drive the driving part so that the positioning mechanism positions or unlocks the workpiece in the accommodating space.

## Description

### CROSS-REFERENCE TO RELATED APPLICATIONS

The present disclosure claims priority to a Chinese patent application No. 202410586684.1 filed with the CNIPA on May 11, 2024 and entitled "CONVEYING DEVICE AND WELDING APPARATUS", which is hereby incorporated by reference in its entirety.

The present disclosure claims priority to a Chinese patent application No. 202421021792.6 filed with the CNIPA on May 11, 2024 and entitled "CONVEYING DEVICE AND WELDING APPARATUS", which is hereby incorporated by reference in its entirety.

The present disclosure claims priority to a Chinese patent application No. 202421025938.4 filed with the CNIPA on May 11, 2024 and entitled "CONVEYING DEVICE AND WELDING APPARATUS", which is hereby incorporated by reference in its entirety.

### TECHNICAL FIELD

The present disclosure relates to a conveying device and a welding apparatus.

### BACKGROUND

During the production process of batteries, it is essential to first position the cell before processing the cell. For example, in the welding procedure of a collector disk, the positioning accuracy between the collector disk and the cell can significantly impact the welding quality, which can, in turn, impact the yield rate of the batteries.

In the related art, when welding a cylindrical cell, a V-block pneumatic positioning mechanism is typically employed to position the cell, or a two-jaw gripper is used to clamp and position the cell. These approaches result in low positioning accuracy, making it difficult to ensure the concentricity between the cell and the collector disk, and are not suitable for high-speed assembly line production.

### SUMMARY

An objective of the present disclosure is to provide a new technical solution for a conveying device, which can at least solve the problem of low positioning accuracy and difficulty in realizing high-speed conveying of the conveying device in the related art.

Another objective of the present disclosure is to provide a welding apparatus comprising the above conveying device.

According to a first aspect of the present disclosure, a conveying device is proposed, which has a loading station and a processing station, and comprises: a positioning mechanism defining an accommodating space suitable for accommodating a workpiece and provided with a movable driving part; a conveying mechanism configured to convey the positioning mechanism from the loading station to the processing station; and a driving mechanism at least provided at the loading station and configured to drive the driving part so that the positioning mechanism positions or unlocks the workpiece in the accommodating space.

Optionally, the driving part protrudes from a surface of the positioning mechanism.

Optionally, the driving part is movable along a first direction, and the driving mechanism comprises: a first pushrod abutting against the driving part; and a first driving member connected to the first pushrod for driving the first pushrod to push the driving part along the first direction so as to unlock the positioning mechanism.

Optionally, at the loading station, a plurality of positioning mechanisms on the conveying mechanism are arranged along a second direction, there are provided a plurality of driving mechanisms, the plurality of driving mechanisms are arranged along the second direction, and the first direction is perpendicular to the second direction.

Optionally, the accommodating space extends through the positioning mechanism along a width direction of the conveying mechanism, and the first direction, the second direction, and the width direction of the conveying mechanism are mutually perpendicular.

Optionally, the conveying device further comprises: a loading support provided at the loading station and located on one side of the conveying mechanism, configured to bear the workpiece; and a loading mechanism provided at the loading station and located on one side of the loading support distal to the conveying mechanism, configured to push the workpiece on the loading support into the accommodating space.

Optionally, the loading mechanism comprises: a second pushrod extending along a width direction of the conveying mechanism, with one end of the second pushrod proximate to the accommodating space configured to push the workpiece; and a second driving member connected to the other end of the second pushrod distal to the accommodating space, to drive the second pushrod to move along the width direction of the conveying mechanism.

Optionally, the conveying device also has an unloading station, which is arranged downstream of the processing station and is provided with the driving mechanism, and further comprises: an unloading support provided at the unloading station and located on one side of the conveying mechanism; and an unloading mechanism provided at the unloading station, located on the other side of the conveying mechanism, and configured to push the workpiece in the accommodating space towards the unloading support.

Optionally, the unloading mechanism comprises: a third pushrod extending along a width direction of the conveying mechanism, with one end of the third pushrod facing towards the accommodating space configured to push the workpiece; a third driving member connected to the other end of the third pushrod, to drive the third pushrod to move along the width direction of the conveying mechanism.

Optionally, the conveying mechanism comprises: a conveyor line extending through the loading station and the processing station, and configured to convey the positioning mechanism from the loading station to the processing station; and a plurality of carriers provided on the conveyor line and connected to the positioning mechanism, with the conveyor line configured to convey the carriers from the loading station to the processing station.

Optionally, the conveyor line is annular, and is configured to reciprocate the positioning mechanism between the loading station and the processing station.

Optionally, the conveyor line is a magnetic levitation conveyor line or a belt conveyor line.

Optionally, further comprising: a limiting mechanism provided at the loading station and configured to limit the carriers in the width direction of the conveying mechanism.

Optionally, each of the carriers has limiting surfaces on both ends thereof in the width direction of the conveying mechanism, and the limiting mechanism comprises: two brackets provided at the loading station, with the carriers located between the two brackets; and a plurality of rollers arranged on the two brackets along an extension direction of the conveyor line, each of the limiting surfaces being connected to at least one roller to limit the carriers.

According to a second aspect of the present disclosure, a welding apparatus is proposed, comprising: the conveying device according to any one of the above embodiments; and a welding device provided at the processing station and configured to weld the workpiece in the positioning mechanism.

Optionally, the welding device comprises: two suction head assemblies provided on both sides of the conveying mechanism and spaced apart along an axial direction of the accommodating space, each of the suction head assemblies being configured to suck a to-be-welded part; and two fourth driving members connected to the two suction head assemblies in one-to-one correspondence, each of the fourth driving members being configured to drive a corresponding suction head assembly to move along an axial direction of the accommodating space.

Optionally, the suction head assembly comprises: a mounting block connected to the fourth driving member; and a pressure head provided on the mounting block and configured to suck the to-be-welded part and press it against an end of the workpiece.

Optionally, the welding device further comprises: two laser assemblies provided on both sides of the conveying mechanism and spaced apart along the axial direction of the accommodating space, with the two suction head assemblies located between the two laser assemblies, each of the laser assembly configured to weld the to-be-welded part and the workpiece.

Optionally, the welding device further comprises: a cushioning assembly connected between one suction head assembly and one fourth driving member and configured to cushion one suction head assembly; and a pressure sensor connected between one cushioning assembly and one suction head assembly and configured to detect a pressure received by one suction head assembly.

According to the conveying device of the present disclosure, by separating the driving mechanism from the positioning mechanism, and utilizing the conveying mechanism to convey the positioning mechanism between various stations while providing the driving mechanism fixedly at the loading station a, it is conductive to simplifying the structure of the conveying device, realizing the assembly line positioning and transportation of the workpiece, and enhancing production efficiency. Moreover, the cooperation between the driving mechanism and the exposed driving part on the positioning mechanism can change the state of the positioning mechanism to achieve both positioning and unlocking of the workpiece so as to make the positioning mechanism automatically perform concentric adjustment in at least two directions of the workpiece simultaneously under the drive of a single power source, which achieves concentric positioning of the workpiece, may prevent the workpiece from being offset in a single direction due to the problem of successive contact during positioning, thereby improving positioning accuracy and, consequently, processing accuracy and product yield.

Other features and advantages of the present disclosure will become apparent from the following detailed description of exemplary embodiments of the present disclosure with reference to the accompanying drawings.

### BRIEF DESCRIPTION OF THE DRAWINGS

The accompanying drawings incorporated in and constituting a part of the specification illustrate embodiments of present disclosure and together with the description thereof, serve to explain the principles of the disclosure.
FIG. 1 is a top view of a conveying device according to an embodiment of the present disclosure;
FIG. 2 is a perspective view of a partial structure of the conveying device at the loading station according to an embodiment of the present disclosure;
FIG. 3 is a side view of the structure shown in FIG. 2;
FIG. 4 is an enlarged view of area A circled in FIG. 3;
FIG. 5 is a perspective view of a partial structure of the conveying device at the unloading station according to an embodiment of the present disclosure;
FIG. 6 is a side view of the structure shown in FIG. 5;
FIG. 7 is a front view of the positioning mechanism in the conveying device according to an embodiment of the present disclosure;
FIG. 8 is a sectional view of the positioning mechanism in the conveying device according to an embodiment of the present disclosure when the positioning assembly is in a first state;
FIG. 9 is a perspective view of the nudging member, transmission rod, and second elastic member in the conveying device according to an embodiment of the present disclosure when the positioning assembly is in a first state;
FIG. 10 is a sectional view of the nudging member, transmission rod, and second elastic member in the conveying device according to an embodiment of the present disclosure when the positioning assembly is in a first state;
FIG. 11 is a sectional view of the positioning mechanism in the conveying device according to an embodiment of the present disclosure when the positioning assembly is in a second state;
FIG. 12 is a perspective view of the nudging member, transmission rod, and second elastic member in the conveying device according to an embodiment of the present disclosure when the positioning assembly is in a second state;
FIG. 13 is a sectional view of the nudging member, transmission rod, and second elastic member in the conveying device according to an embodiment of the present disclosure when the positioning assembly is in a second state;
FIG. 14 is a perspective view of the welding device according to an embodiment of the present disclosure in a standby position;
FIG. 15 is a perspective view of the welding device according to an embodiment of the present disclosure in a welding position;
FIG. 16 is a side view of the welding device according to an embodiment of the present disclosure in the welding position.

### Description of reference signs:

conveying device 100; loading station a; processing station b; unloading station c;
positioning mechanism 10;
mounting base 11;
front coverplate 111; rear coverplate 112; side coverplate 113; accommodating space 114; mounting space 115; guiding channel 116; bushing 117;
positioning assembly 12; centering block 121; first arc-shaped surface 1211; second arc-shaped surface 1212; stop pin 122; connecting base 123; centering wheel 124;
transmission assembly 13; transmission wheel 131; first guiding surface 1311; step 1312; first tooth 1313; projection 1314; groove 1315; nudging member 132; rack 1321; guiding block 1322; second tooth 1323; first driving column 1324; second driving column 1325; transmission rod 133; driving part 1331; second guiding surface 1332; first elastic member 14; second elastic member 15;
conveying mechanism 20; conveyor line 21; carrier 22;
driving mechanism 30; first pushrod 31; first driving member 32;
loading support 40;
loading mechanism 50; second pushrod 51; second driving member 52;
unloading support 60; unloading mechanism 70; third pushrod 71; third driving member 72;
limiting mechanism 80; bracket 81; roller 82;
welding device 200; suction head assembly 201; mounting block 2011; pressure head 2012; fourth driving member 202; laser assembly 203; cushioning assembly 204; pressure sensor 205; mounting plate 206;
workpiece 300.

### DETAILED DESCRIPTION

Various exemplary embodiments of the present disclosure will now be described in detail with reference to the accompanying drawings. It is to be noted that unless otherwise specifically stated, the relative arrangements, numerical expressions and values of components and steps illustrated in the embodiments do not limit the scope of the present disclosure.

The description of at least one exemplary embodiment is for illustrative purpose only and in no way implies any restriction on the present disclosure, its application, or use.

Techniques, methods and devices known to those skilled in the prior art may not be discussed in detail; however, they shall be regarded as part of the description where appropriate.

In all the examples illustrated and discussed herein, any specific value shall be interpreted as illustrative rather than restrictive. Therefore, other examples of the exemplary embodiments may have different values.

It is to be noted that similar reference numbers and alphabetical letters represent similar items in the accompanying drawings. Once an item is defined in one drawing, further reference to it may be omitted in subsequent drawings.

A conveying device 100 according to an embodiment of the present disclosure is first described below specifically in connection with the accompanying drawings.

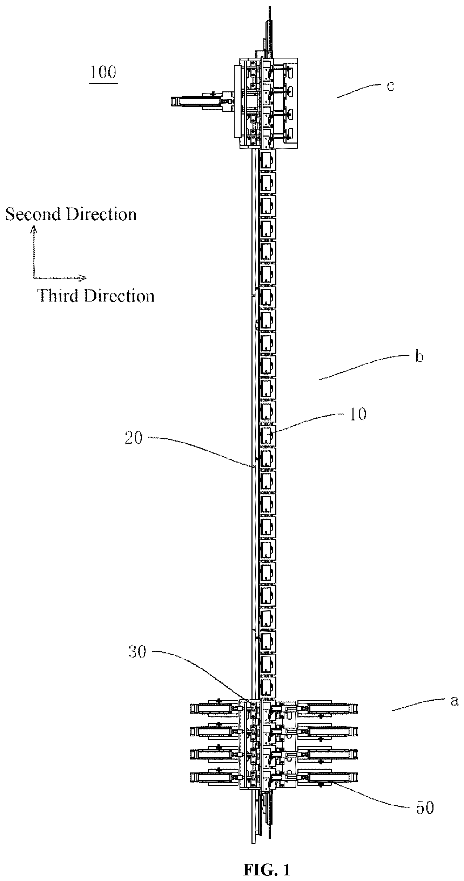

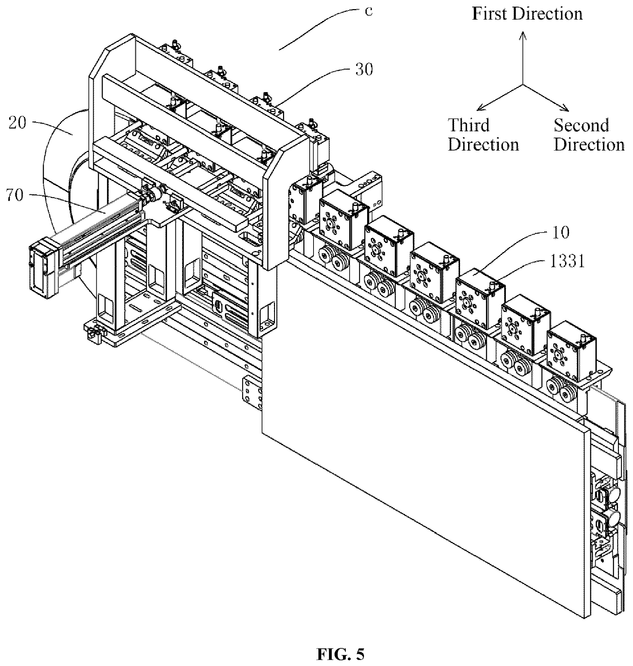

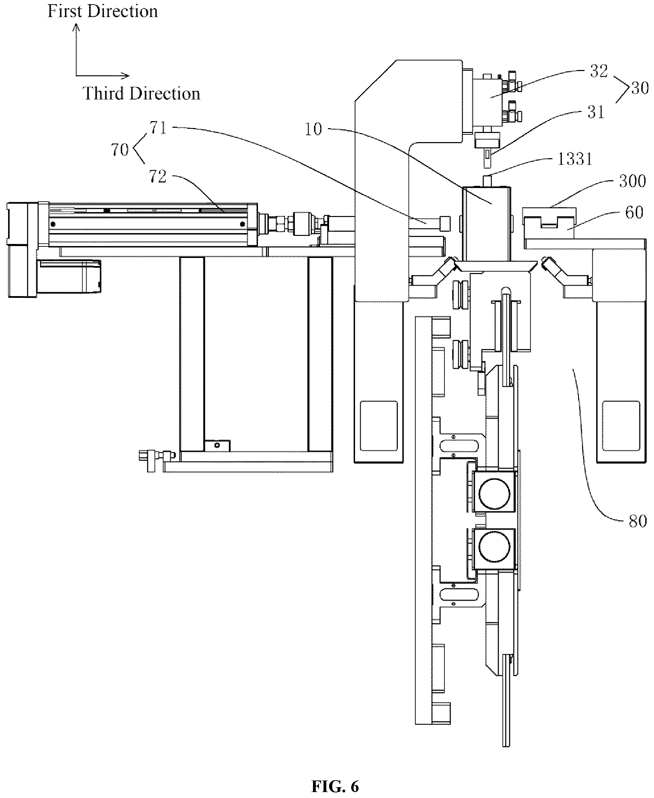

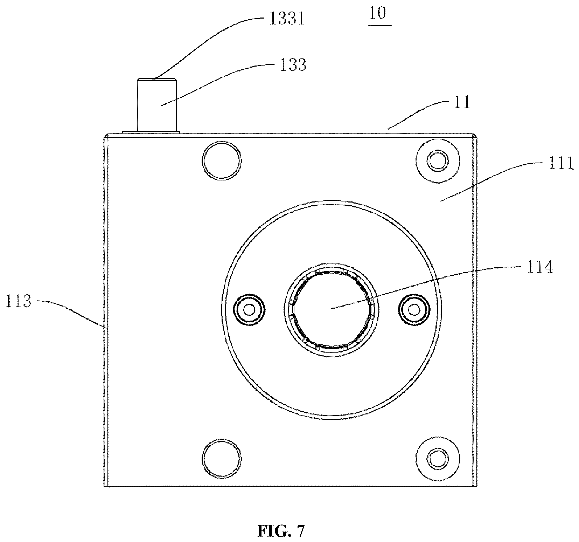

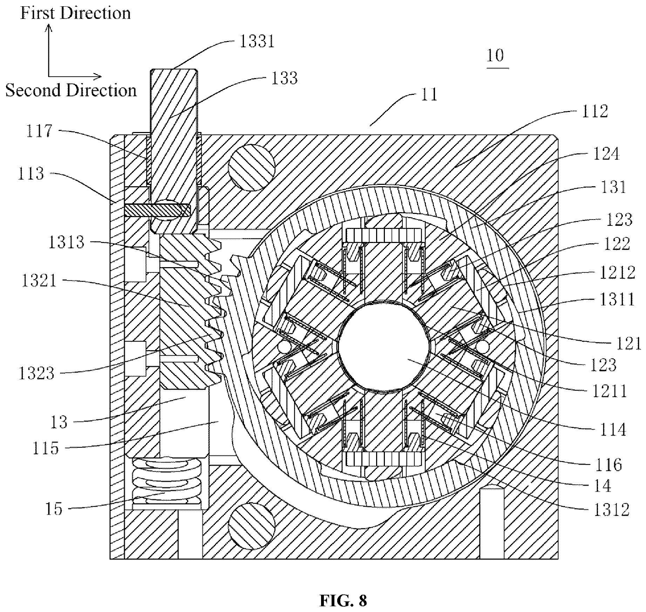

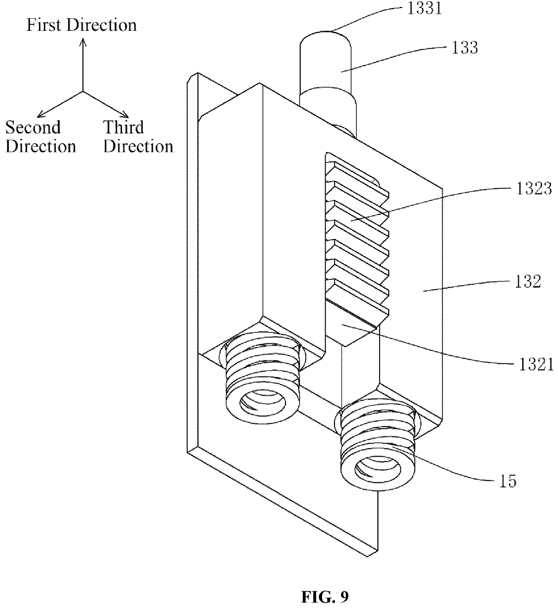

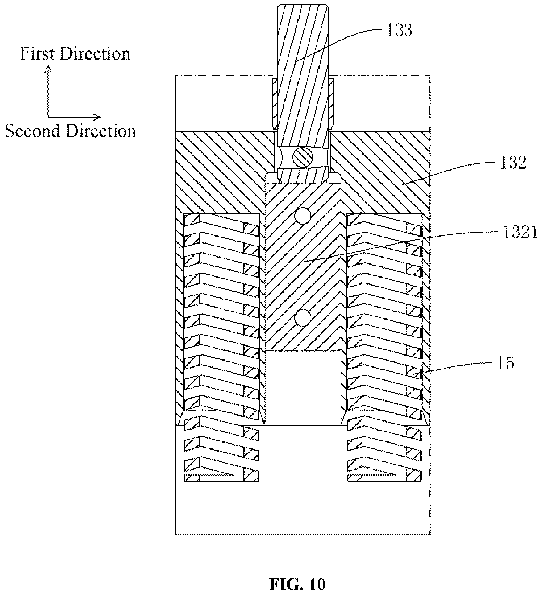

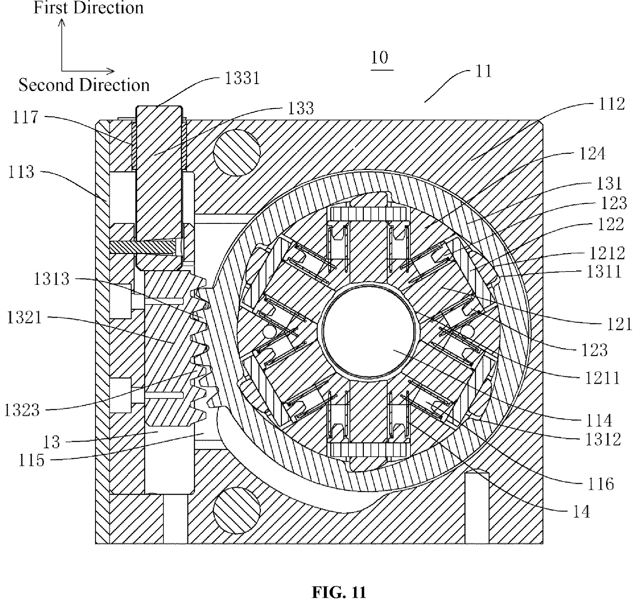

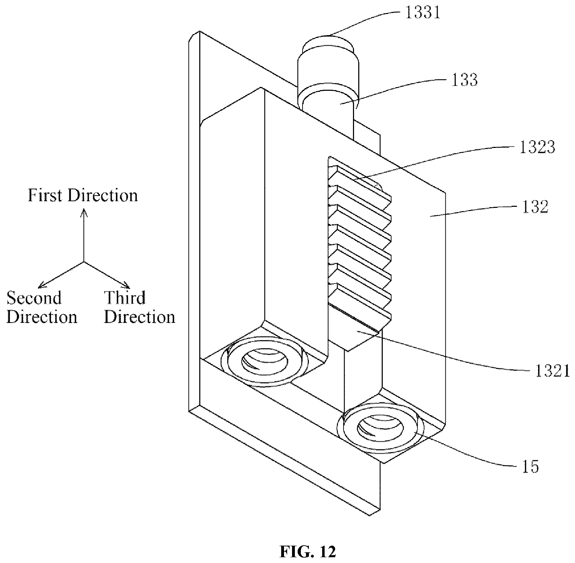

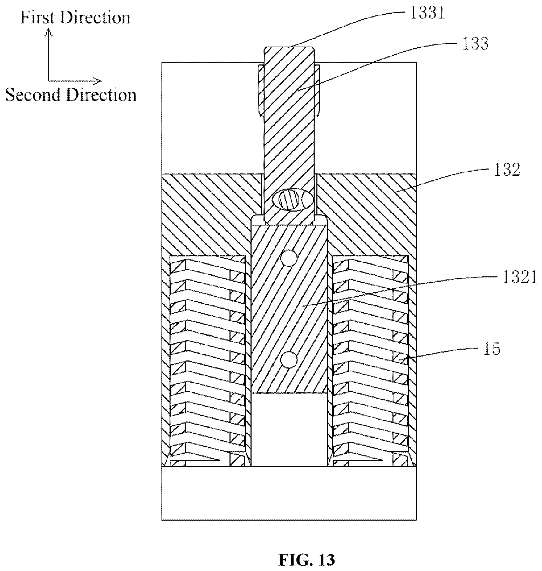

As shown in FIGS. 1 to 13, the conveying device 100 according to embodiments of the present disclosure has a loading station "a" and a processing station "b". The conveying device 100 includes: a positioning mechanism 10, a conveying mechanism 20, and a driving mechanism 30.

Specifically, the positioning mechanism 10 defines an accommodating space 114 suitable for accommodating a workpiece 300, and is provided with a movable driving part 1331. The conveying mechanism 20 is configured to convey the positioning mechanism 10 from the loading station "a" to the processing station "b". The driving mechanism 30 is at least provided at the loading station a, and is configured to drive the driving part 1331 so that the positioning mechanism 10 positions or unlocks the workpiece 300 in the accommodating space 114.

In other words, the conveying device 100 according to embodiments of the present disclosure mainly consists of the positioning mechanism 10, the conveying mechanism 20, and the driving mechanism 30. The to-be-welded workpiece 300 may be loaded onto the conveying device 100 and be transported by the conveying device 100 to the processing station "b" for processing. The shape of the workpiece 300 may include, but is not limited to, a cylindrical shape, an elliptical cylindrical shape, and a polygonal cylindrical shape.

Specifically, the positioning mechanism 10 may position the workpiece 300, and the workpiece 300 can then be conveyed on the conveying mechanism 20 by means of the positioning mechanism 10. The positioning mechanism 10 is provided with an accommodating space 114, and the workpiece 300 can be mounted in the accommodating space 114 and positioned by a movable structure in the positioning mechanism 10.

The positioning mechanism 10 may include a driving part 1331, and the driving mechanism 30 is provided at the loading station a. After the positioning mechanism 10 is conveyed to the loading station a, the driving mechanism 30 may drive the driving part 1331, enabling the positioning mechanism 10 to switch between a first state and a second state.

When the positioning mechanism 10 is in the first state, it may position and hold the workpiece 300. When the positioning mechanism 10 is in the second state, it unlocks the workpiece 300, meaning that the positioning mechanism 10 may release the workpiece 300.

In other words, the driving mechanism 30 may serve as an external power source for the positioning mechanism 10, and the driving part 1331 may serve as an input end of the positioning mechanism 10 for power input. Therefore, the driving mechanism 30 may be fixedly provided at the loading station "a", while the positioning mechanism 10, used for positioning, may be conveyed between various stations along with the conveying mechanism 20, which may position the workpiece 300 rapidly on one hand, and is conductive to simplifying the structure of the conveying device 100 on the other hand.

It should be noted that the drive provided by the driving mechanism 30 to the driving part 1331 may include, but is not limited to, linear drive and curved drive, which is not limited herein. In other words, under the drive of the driving mechanism 30, the driving part 1331 can perform linear motion, rotational motion, or irregular motion, as long as it can lead the movable structure in the positioning mechanism 10 to move, thereby achieving both positioning and unlocking of the workpiece 300.

Additionally, the internal structure of the positioning mechanism 10 is not specifically defined in the present embodiment, as long as it can satisfy the requirement of achieving positioning and unlocking of the workpiece 300 under the drive of the driving part 1331.

Consequently, according to the conveying device 100 of the present disclosure, by separating the driving mechanism 30 from the positioning mechanism 10, and utilizing the conveying mechanism 20 to convey the positioning mechanism 10 between various stations while providing the driving mechanism 30 fixedly at the loading station "a", it is conductive to simplifying the structure of the conveying device 100, realizing the assembly line positioning and transportation of the workpiece 300, and enhancing production efficiency. Moreover, the cooperation between the driving mechanism 30 and the exposed driving part 1331 on the positioning mechanism 10 may change the state of the positioning mechanism 10 to achieve both positioning and unlocking of the workpiece 300 so as to make the positioning mechanism 10 automatically perform concentric adjustment in at least two directions of the workpiece 300 simultaneously under the drive of a single power source, which achieves concentric positioning of the workpiece 300, may prevent the workpiece 300 from being offset in a single direction due to the problem of successive contact when positioning, thereby improving positioning accuracy and consequently processing accuracy and product yield.

Optionally, the workpiece 300 may be a cell used for manufacturing a cylindrical battery. The positioning mechanism 10 is capable of concentrically positioning the cell to which the collector disk is not welded, and then at the processing station "b", the collector disk may be welded to the end of the cell by using the welding device 200, so as to improve the concentricity between the collector tab and the cell, and to enhance welding quality and the yield rate of battery production.

According to an embodiment of the present disclosure, the driving part 1331 protrudes from a surface of the positioning mechanism 10, so as to facilitate the driving mechanism 30 to drive the driving part 1331.

Specifically, since the driving part 1331 protrudes from a surface of the positioning mechanism 10, the size of the end of the driving mechanism 30 in contact with the driving part 1331 may be designed to be larger than that of the driving part 1331, so that when the positioning mechanism 10 is displaced in the conveying direction, the driving mechanism 30 can still stably drive the driving part 1331.

In other embodiments, the driving part 1331 may be accommodated in the positioning mechanism 10, and a portion of the driving mechanism 30 may extend into the positioning mechanism 10 to drive the driving part 1331.

According to an embodiment of the present disclosure, the driving part 1331 is movable along a first direction, and the driving mechanism 30 comprises a first pushrod 31 and a first driving member 32. The first pushrod 31 abuts against the driving part 1331. The first driving member 32 is connected to the first pushrod 31 for driving the first pushrod 31 to push the driving part 1331 along the first direction.

Specifically, the driving part 1331 may perform linear motion in the first direction, and the driving mechanism may be mainly composed of the pushrod and the first driving member 32. The first driving member 32 may be connected to the first pushrod 31 and drive the first pushrod 31 to move along the first direction. The first driving member 32 may include, but is not limited to, an air cylinder and a hydraulic cylinder.

During loading, in the initial state, the positioning mechanism 10 may be in the first state. By driving the first pushrod 31 by means of the first driving member 32 such that the first pushrod 31 pushes the driving part 1331 along the first direction, it is possible to cause the positioning mechanism 10 to switch from the first state to the second state, and to cause the positioning mechanism 10 to open, thereby facilitating the workpiece 300 to enter the accommodating space 114.

After the workpiece 300 enters the accommodating space 114, the first driving member 32 may drive the first pushrod 31 away from the driving part 1331, and the positioning mechanism 10 may be provided with a reset structure therein, which may enable the positioning mechanism 10 to have a tendency to switch from the second state to the first state. Therefore, when the driving force of the first driving member 32 is removed, that is, when the driving part 1331 is not subjected to an external force, the reset mechanism may make the positioning mechanism 10 return to the first state, thereby realizing the positioning of the workpiece 300.

In some specific implementations of the present disclosure, at the loading station "a", a plurality of positioning mechanisms 10 on the conveying mechanism 20 are arranged along a second direction, there are provided a plurality of driving mechanisms 30, the plurality of driving mechanisms 30 are arranged along the second direction, and the second direction is perpendicular to the first direction and the axial direction of the accommodating space 114, respectively.

Therefore, the plurality of driving mechanisms 30 may be arranged corresponding to the plurality of positioning mechanisms 10 on the conveying mechanism 20 so as to load and position the workpieces 300 in batches, which is conducive to improving conveying efficiency and positioning efficiency.

According to other embodiments of the present disclosure, the accommodating space 114 extends through the positioning mechanism 10 along a width direction of the conveying mechanism 20, and the first direction, the second direction, and the width direction of the conveying mechanism 20 are mutually perpendicular.

For convenience of description, the conveying direction in which the conveying mechanism 20 conveys the positioning mechanism 10 at the loading station "a" may be defined as a second direction, the width direction of the conveying mechanism 20 is a third direction, and the first direction, the second direction, and the third direction are mutually perpendicular.

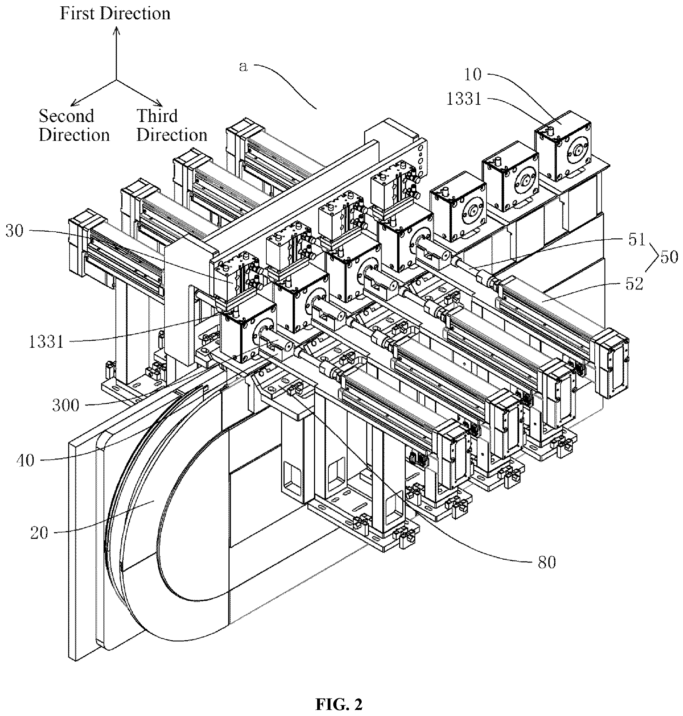

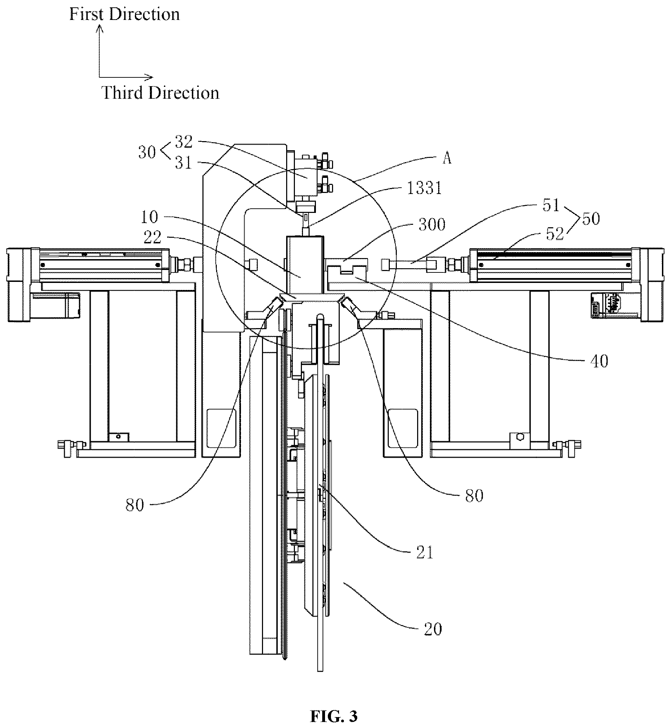

As shown in FIGS. 2 and 3, the linear motion direction of the driving part 1331 may be perpendicular to the extension direction of the accommodating space 114, that is, the first direction is perpendicular to the third direction. The width direction of the conveying mechanism 20 may coincide with the third direction.

In the present embodiment, the driving mechanism 30 may drive the driving part 1331 from the end of the positioning mechanism 10 distal to the conveying mechanism 20, which facilitates flexible arrangement of the driving mechanism 30 at the loading station "a".

When the third direction is the horizontal direction, the first direction may be the vertical direction, and the driving mechanism 30 may be mounted above the positioning mechanism 10 by means of a mounting bracket.

According to some alternative embodiments of the present disclosure, the conveying device 100 further includes a loading support 40 and a loading mechanism 50. The loading support 40 is provided at the loading station "a", located on one side of the conveying mechanism 20, and configured to bear the workpiece 300. The loading mechanism 50 is provided at the loading station "a", located on one side of the loading support 40 distal to the conveying mechanism 20, and configured to push the workpiece 300 on the loading support 40 into the accommodating space 114.

In particular, the loading station "a" may also be provided with the loading support 40 and the loading mechanism 50, and the loading support 40 and the loading mechanism 50 may be located on the same side of the conveying mechanism 20.

Here, the loading support 40 may be located on one side of the loading mechanism 50 proximate to the conveying mechanism 20, and the loading support 40 may support the workpiece 300. During loading, a robotic arm may grab the workpiece 300 and convey it to the loading support 40, and then the loading mechanism 50 pushes the column on the loading support 40 into the accommodating space 114.

Optionally, an upper surface of the loading support 40 may have an arc-shaped surface that fits with the workpiece 300. For example, when the workpiece 300 is a cylindrical cell, the arc-shaped surface of the loading support 40 may be in the shape of a circular arc, and the workpiece 300 may be preliminarily positioned by using the arc-shaped surface, such that the workpiece 300 is aligned with the accommodating space 114 on the positioning mechanism 10.

In the present embodiment, by first bearing the workpiece 300 by using the loading support 40 and preliminarily positioning the workpiece 300, and then pushing the workpiece 300 from a side of the conveying mechanism 20 into the accommodating space 114 of the positioning mechanism 10 by using the loading mechanism 50 so as to concentrically positioning the workpiece 300 by the positioning mechanism 10, it is beneficial to improving the positioning accuracy, and improving the loading efficiency while avoiding jams from occurring.

According to other embodiments of the present disclosure, the loading mechanism 50 comprises: a second pushrod 51 and a second driving member 52. The second pushrod 51 extends along a width direction of the conveying mechanism 20, and an end of the second pushrod 51 proximate to the accommodating space 114 is configured to push the workpiece 300. The second driving member 52 is connected to the other end of the second pushrod 51 distal to the accommodating space 114 for driving the second pushrod 51 to move along the width direction of the conveying mechanism 20.

In other words, the loading mechanism 50 of the present embodiment is mainly composed of the second pushrod 51 and the second driving member 52. The second pushrod 51 may extend in the first direction, one end of the second pushrod 51 may be connected to the second driving member 52, and the other end of the second pushrod 51 may be configured to push the workpiece 300. The second driving member 52 may include, but is not limited to, an air cylinder and a hydraulic cylinder. The loading mechanism 50 composed of the second pushrod 51 and the second driving member 52 has the advantages of simple structure, low cost, and high reliability.

In some specific implementations of the present disclosure, the conveying device 100 also has an unloading station "c" arranged downstream of the processing station "b", and the unloading station "c" is provided with the driving mechanism 30. The conveying device 100 further comprises an unloading support 60 and an unloading mechanism 70. The unloading support 60 is provided at the unloading station "c" and located on one side of the conveying mechanism 20. The unloading mechanism 70 is provided at the unloading station "c", located on the other side of the conveying mechanism 20, and configured to push the workpiece 300 in the accommodating space 114 towards the unloading support 60.

Specifically, the conveying device 100 includes the loading station "a", the processing station "b", and the unloading station "c" arranged sequentially along its own conveying direction. The positioning mechanism 10 may receive the workpiece 300 at the loading station "a" and position the workpiece 300. The positioning mechanism 10 may maintain the positioning of the workpiece 300 at the processing station "b" while the workpiece 300 completes the corresponding processing. The positioning mechanism 10 may unlock the workpiece 300 at the unloading station "c" to facilitate the unloading of the workpiece 300.

The unloading station "c" may be provided with the driving mechanism 30. After the positioning mechanism 10 is conveyed to the unloading station "c", the driving mechanism 30 at the unloading station "c" may drive the driving part 1331, such that the positioning mechanism 10 unlock the positioning of the workpiece 300, and thus the workpiece 300 may be separated from the accommodating space 114 to complete the loading of the workpiece 300.

The unloading station "c" may also be provided with the unloading support 60 and the unloading mechanism 70. The unloading mechanism 70 and the unloading support 60 may be provided on either side of the conveying mechanism 20, that is, the conveying mechanism 20 is located between the unloading mechanism 70 and the unloading support 60. The unloading support 60 may have the same structure as the loading support 40.

The unloading mechanism 70 may push the workpiece 300 from one side of the conveying mechanism 20 to the other side of the conveying mechanism 20, such that the workpiece 300 is moved onto the unloading support 60, and then the workpiece 300 on the unloading support 60 is grasped by the robotic arm for unloading.

According to some alternative embodiments of the present disclosure, the unloading mechanism 70 comprises a third pushrod 71 and a third driving member 72. The third pushrod 71 extends along a width direction of the conveying mechanism 20, and an end of the third pushrod 71 facing towards the accommodating space 114 is configured to push the workpiece 300. The third driving member 72 is connected to the other end of the third pushrod 71 for driving the third pushrod 71 to move along the width direction of the conveying mechanism 20.

That is to say, the unloading mechanism 70 of the present embodiment is mainly composed of the third pushrod 71 and the third driving member 72. The third pushrod 71 may extend in the third direction, one end of the third pushrod 71 may be connected to the third driving member 72, and the other end of the third pushrod 71 is configured to push the workpiece 300. The third driving member 72 may include, but is not limited to, an air cylinder and a hydraulic cylinder. The unloading mechanism 70 composed of the third pushrod 71 and the third driving member 72 has the advantages of simple structure, low cost, and high reliability.

Optionally, the unloading mechanism 70 and the loading mechanism 50 may have the same structure, so as to reduce the types of components in the conveying device 100, which is beneficial to simplifying the conveying device 100.

According to other embodiments of the present disclosure, the conveying mechanism 20 comprises a conveyor line 21 and a plurality of carriers 22. The conveyor line 21 extends through the loading station "a" and the processing station "b", and configured to convey the positioning mechanism 10 from the loading station "a" towards the processing station "b". The plurality of carriers 22 are provided on the conveyor line 21 and connected to the positioning mechanism 10, and the conveyor line 21 is configured to convey the carriers 22 from the loading station "a" towards the processing station "b".

Specifically, the conveying mechanism 20 is mainly composed of the conveyor line 21 and the plurality of carriers 22. These carriers 22 may be connected to the conveyor line 21 and sequentially pass through the loading station "a", processing station "b", and unloading station "c" as they are conveyed by the conveyor line 21. Each carrier 22 may be equipped with one positioning mechanism 10. Optionally, the positioning mechanism 10 may be removably connected to the carrier 22.

In the present embodiment, by mounting the positioning mechanism 10 by means of the carriers 22 of the conveyor line 21, it is possible to allow the plurality of positioning mechanisms 10 to be spaced apart, thereby preventing interference between them. Additionally, since the positioning mechanism 10 and the carrier 22 are separate structures, they can be assembled or disassembled independently, which facilitates the maintenance and repair of the positioning mechanism 10. When one positioning mechanism 10 in the conveying device 100 fails, a spare positioning mechanism 10 may be mounted onto the carrier 22 to allow the conveying device 100 to continue operating. The faulty positioning mechanism 10 may then be disassembled for repair, so as to avoid downtime for maintenance, thereby avoiding any impact on productivity.

In some specific implementations of the present disclosure, the conveyor line 21 is annular, and is configured to reciprocate the positioning mechanism 10 between the loading station "a" and the processing station "b".

Specifically, the conveyor line 21 may include an upper conveyor belt, a lower conveyor belt, and two arc-shaped conveyor belts. The upper conveyor belt may be positioned above the lower conveyor belt, and the upper conveyor belt and the lower conveyor belt may be located between the two arc-shaped conveyor belts. Each arc-shaped conveyor belt may be in a semi-circular arc, and may be connected to both the upper and lower conveyor belts, thereby forming an annular conveyor line 21.

The upper conveyor belt may sequentially pass through the loading station "a", the processing station "b", and the unloading station "c". When the positioning mechanism 10 is conveyed on the upper conveyor belt, it can be located above the upper conveyor belt. The upper conveyor belt may convey the positioning mechanism 10 sequentially to the loading station "a", the processing station "b", and the unloading station "c"; afterward, one arc-shaped conveyor belt may convey the positioning mechanism 10 to the lower conveyor belt, and another arc-shaped conveyor belt may return the positioning mechanism 10 to the loading station "a", so as to enable the reciprocating of the positioning mechanism 10 between the loading station "a", the processing station "b", and the unloading station "c", which achieves automatic recycling of the positioning mechanism 10 and enhances conveying efficiency.

According to some alternative embodiments of the present disclosure, the conveyor line 21 is a magnetic levitation conveyor line 21 or a belt conveyor line 21. The magnetic levitation conveyor line 21 has the advantages of high efficiency, reliability, safety, and design flexibility. The belt conveyor line 21 has the advantages of high efficiency, good applicability, high safety and low energy consumption. Both enable conveying to the positioning mechanism 10. The conveyor line 21 may adopt another conveying method as long as the positioning mechanism 10 can be conveyed from the loading station "a" to the unloading station "c".

According to other embodiments of the present disclosure, the conveying device 100 further comprises a limiting mechanism 80 provided at the loading station "a" and configured to limit the carriers 22 in the width direction of the conveying mechanism 20. Therefore, it is possible to prevent the carriers 22 and the positioning mechanism 10 on the carriers 22 from shaking in the third direction, facilitating the entry of the workpiece 300 into the accommodating space 114 of the positioning mechanism 10.

In some specific implementations of the present disclosure, each of the carriers 22 has limiting surfaces on both ends thereof in the width direction of the conveying mechanism 20, and the limiting mechanism 80 comprises two brackets 81 and a plurality of rollers 82. The two brackets 81 are provided at the loading station "a", and the carriers 22 are located between the two brackets. The plurality of rollers 82 are arranged on the two brackets 81 along an extension direction of the conveyor line 21, and each of the limiting surfaces is connected to at least one roller to limit the carriers 22.

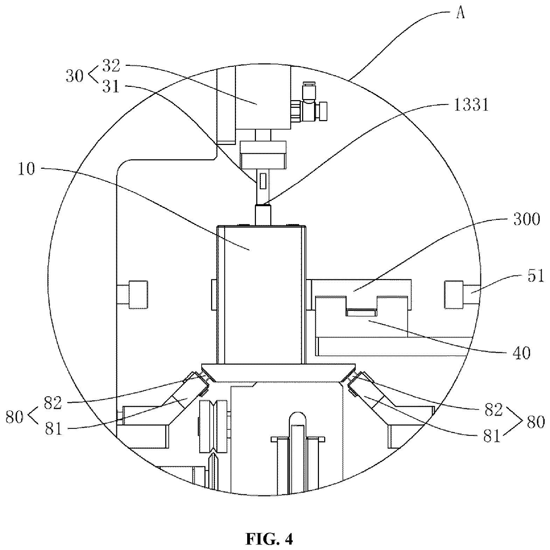

As shown in FIG. 4, the brackets 81 may be provided on both sides of the conveyor line 21, and each bracket 81 may be provided with a plurality of rollers 82 which are arranged along the second direction. The carrier 22 may have two limiting surfaces in the second direction, each of which may be in rolling connection with the roller 82 at the corresponding side. When the carrier 22 is conveyed on the conveyor line 21, the rollers 82 may abut against the limiting surface and roll relative to it. The rollers 82 on both sides of the conveyor line 21 may limit the carrier 22 in the third direction, preventing the positioning mechanism 10 from shaking in the third direction, and thus facilitating the entry of the workpiece 300 into the accommodating space 114 of the positioning mechanism 10.

Additionally, the structure where the rollers 82 cooperate with the limiting surfaces not only achieves the positioning function but also facilitates to reduction on friction between them, avoiding limiting function from affecting the normal conveying of the conveying mechanism 20.

According to some alternative embodiments of the present disclosure, the limiting surfaces are inclined relative to the horizontal plane. As shown in FIG. 4, in the top-down direction, the two limiting surfaces may be tilted in a direction close to each other, and in order to make the rollers 82 on both sides abut against the limiting surfaces, the axes of the rollers 82 may be inclined relative to both the horizontal and vertical directions.

According to some specific embodiments, the mounting base 11 defines an accommodating space 114 suitable for accommodating the to-be-positioned workpiece . The positioning assembly 12 includes a plurality of centering blocks 121, which are arranged on the mounting base 11 along the circumferential direction of the accommodating space 114. The transmission assembly 13 has an input end and an output end, the input end is formed as a driving part, and the output end is connected to the plurality of centering blocks 121 and drives them to move synchronously along the radial direction of the accommodating space 114, so that the positioning assembly 12 is switchable between a first state and a second state. When the positioning assembly 12 is in the first state, the plurality of centering blocks 121 press against the workpiece for concentric positioning. When the positioning assembly 12 is in the second state, the centering blocks 121 are spaced apart from the workpiece to form a gap.

Consequently, according to the embodiments of the present disclosure, by providing the plurality of centering blocks 121 surrounding the accommodating space 114, and using the transmission assembly 13 to drive the plurality of centering blocks 121 to clamp or release the workpiece radially, it is possible to allow for automatic centering in a plurality of directions, thereby achieving concentric positioning of the workpiece. Compared to a traditional V-block pneumatic positioning jaw, the positioning mechanism 10 of the present disclosure may prevent the workpiece from being offset in one direction due to sequential contact during positioning, which facilitates improvement on positioning accuracy and thus improves processing accuracy and product yield.

The number of the centering blocks 121 is six to allow simultaneous concentric positioning of the workpiece from six directions, which facilitates improvement on positioning accuracy to prevent displacement of the workpiece in any one direction, and also facilitates control on the overall size of the positioning mechanism 10 to avoid excessive space from being occupied.

The end of each centering block 121 facing towards the accommodating space 114 has a first arc-shaped surface 1211, which is recessed in a direction away from the accommodating space 114.

The end of the centering block 121 distal to the accommodating space 114 has a second arc-shaped surface 1212. The transmission assembly 13 includes an annular transmission wheel 131, whose inner circumferential surface is provided with a plurality of first guiding surface 1311 arranged at intervals in the circumferential direction. These first guiding surfaces 1311 abut against the second arc-shaped surfaces 1212 and are inclined towards the accommodating space 114 in the radial direction of the transmission wheel 131. A step 1312 is formed between two adjacent first guiding surfaces 1311. The transmission wheel 131 is coaxially provided with the accommodating space 114 and is rotatable about its own axis, so as to drive the plurality of centering blocks 121 to move synchronously along the radial direction of the accommodating space 114.

The positioning mechanism 10 also includes a plurality of first elastic members 14, which are arranged along the circumferential direction of the accommodating space 114. Each first elastic member 14 is retractable in the radial direction of the accommodating space 114, one end of each first elastic member 14 proximate to the accommodating space 114 is connected to the mounting base 11, while each centering block 121 is connected to the other end of at least one centering block 121, thereby pressing the centering block 121 against the second arc-shaped surface 1212.

Each centering block 121 is provided with a stop pin 122, which passes through the centering block 121 in the circumferential direction of the accommodating space 114. Both ends of the stop pin 122 are provided with a connecting base 123 respectively, and the connecting base 123 is connected to the first elastic members 14.

The mounting base 11 may be provided with a plurality of guiding members arranged along the circumferential direction of the accommodating space 114. Each guiding member may extend in the radial direction of the accommodating space 114 and is configured to guide the centering block 121 along the radial direction of the accommodating space 114 to prevent the centering block 121 from being misaligned.

Optionally, the guiding member may be a guiding channel 116, and the centering block 121, the first elastic member 14, the stop pin 122, and the connecting base 123 may be accommodated in the guiding channel 116. The connecting base 123 may be slidably connected to the inner wall of the guiding channel 116.

The outer circumference of the transmission wheel 131 is provided with a nudging part. The transmission assembly 13 further includes a nudging member 132, which is movable between a first position and a second position along the first direction. The nudging member 132 is provided with a cooperating part that cooperates with the nudging part to drive the transmission wheel 131 to rotate. When the nudging member 132 is in the first position, the positioning assembly 12 is in the first state. When the nudging member 132 is in the second position, the positioning assembly 12 is in the second state.

The transmission assembly 13 also includes a transmission rod 133 capable of linear motion. One end of the transmission rod 133 is connected to the nudging member 132, and the other end serves as the input end.

A bushing 117 may be provided between the transmission rod 133 and the mounting base 11 to reduce the friction between them.

The input end protrudes over the outer surface of the mounting base 11. When the nudging member 132 is in the first position, the length by which the input end protrudes over the outer surface of the mounting base 11 is L1, and when the nudging member 132 is in the first position, the length by which the input end protrudes over the outer surface of the mounting base 11 is L2, wherein L1 < L2.

The nudging part includes a plurality of first teeth 1313 arranged along the circumferential direction of the transmission wheel 131. The nudging member 132 includes a rack 1321, and the cooperating part includes a plurality of second teeth 1323 arranged along the first direction, wherein the first teeth 1313 is engaged with the second teeth 1323 for transmission.

The transmission rod 133 extends and is movable along the first direction.

The positioning mechanism 10 also includes a second elastic member 15, one end thereof is connected to the nudging member 132, and the other end thereof is connected to the mounting base 11. The second elastic member 15 is retractable along the first direction for driving the nudging member 132 from the second position to the first position.

The mounting base 11 includes a front coverplate 111, rear coverplate 112, and side coverplate 113. The rear coverplate 112 covers the front coverplate 111 and cooperates with it to define a mounting space 115 suitable for accommodating the positioning assembly 12 and transmission assembly 13. The accommodating space 114 penetrates through at least one of the front coverplate 111 and rear coverplate 112 along the thickness direction of the front coverplate 111. The mounting space 115 has an opening located at the ends of the front coverplate 111 and rear coverplate 112. The side coverplate 113 covers the opening.

The positioning mechanism 10 also includes a centering wheel 124. The centering block 121, the first elastic member 14, the stop pin 122, and the connecting base 123 may be mounted on the centering wheel 124. The accommodating space 114 runs through the centering wheel 124 along the axial direction of the centering wheel 124, and is coaxially provided with the accommodating space 114. One end of the centering block 121 may protrude over the inner surface of the centering wheel 124, and the other end thereof may protrude over its outer surface.

The operation process of the conveying device 100 of the present embodiment is described in detail below.

The robotic arm delivers the workpiece 300 to the loading support 40, and the first driving member 32 at the loading station "a" drives the first pushrod 31 to push the driving part 1331 along the first direction, such that the positioning mechanism 10 is switched from the first state to the second state. The second driving member 52 drives the second pushrod 51 along the first direction into the accommodating space 114 to push the workpiece 300 into the accommodating space 114. The first driving member 32 at the loading station "a" then drives the first pushrod 31 back and is separated from the driving part 1331, and the positioning mechanism 10 is switch from the second state to the first state under its own reset structure, completing the positioning of the workpiece 300. The second driving member 52 then drives the second pushrod 51 to be away from the accommodating space 114 along the first direction. The conveying mechanism 20 conveys the positioning mechanism 10, which has completed the positioning, to the processing station "b", and the workpiece 300 undergoes corresponding processing at the processing station "b", such as welding. The conveying mechanism 20 then conveys the processed workpiece 300 and the corresponding positioning mechanism 10 to the unloading station "c". The first driving member 32 at the unloading station "c" drives the first pushrod 31 along the first direction to push the driving part 1331, such that the positioning mechanism 10 is switched from the first state to the second state. The third driving member 72 drives the third pushrod 71 along the first direction into the accommodating space 114, so as to push the workpiece 300 out of the accommodating space 114 and deposit it onto the unloading support 60. The robotic arm takes the workpiece 300 away from the unloading support 60. The third driving member 72 then drives the third pushrod 71 to be away from the accommodating space 114 along the first direction. The conveying mechanism 20 conveys the positioning mechanism 10 from the unloading station "c" back to the loading station "a", and then performs the next round of conveying.

An embodiment of the present disclosure also provides a welding apparatus including the conveying device 100 according to any one of the above embodiments and a welding device 200. The welding device 200 is provided at the processing station "b", and is configured to weld the workpiece 300 in the positioning mechanism 10. The workpiece 300 may be a cylindrical cell, and the welding device 200 may weld the collector disk to both ends of the cylindrical cell.

Since the conveying device 100 according to the embodiment of the present disclosure possesses the above technical effects, the welding apparatus according to the embodiment of the present disclosure also possesses corresponding technical effects, that is, being conductive to simplifying the structure of the conveying device 100, realizing the assembly line positioning and transportation of the workpiece 300, and enhancing production efficiency; making the positioning mechanism 10 automatically perform concentric adjustment in at least two directions of the workpiece 300 simultaneously under the drive of a single power source, which achieves concentric positioning of the workpiece 300, may prevent the workpiece 300 from being offset in a single direction due to the problem of successive contact when positioning, thereby improving positioning accuracy and, consequently, processing accuracy and product yield.

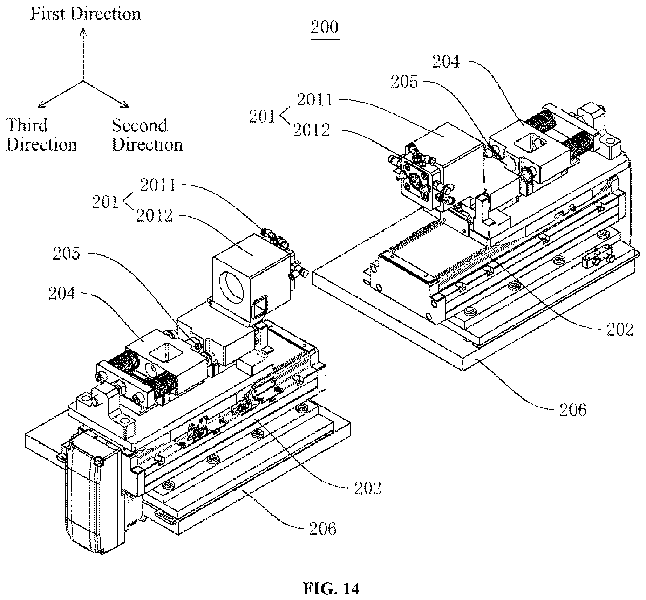

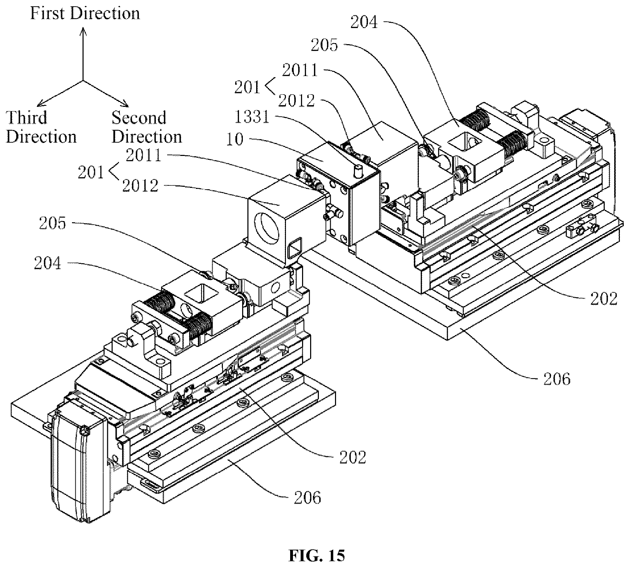

According to other embodiments of the present disclosure, as shown in FIGS. 14 to 16, the welding device 200 comprises two suction head assemblies 201 and two fourth driving members 202. The two suction head assemblies 201 are provided on both sides of the conveying mechanism 20 and are spaced apart along an width direction of the conveying mechanism 20, and each of the suction head assemblies 201 is configured to suck a to-be-welded part. The two fourth driving members 202 are connected to the two suction head assemblies 201 in one-to-one correspondence. Each of the fourth driving members 202 is configured to drive a corresponding suction head assembly 201 to move along the width direction of the conveying mechanism 20.

Specifically, at processing station "b", the suction head assembly 201 and the fourth driving member 202 may be provided on both sides of the conveying mechanism 20 respectively. The fourth driving member 202 may drive the suction head assembly 201 to move close to or away from the cylindrical cell on the positioning mechanism 10. The suction head assembly 201 may suck the collector disk, and press the collector disk against the end face of the cylindrical cell.

During welding, the fourth driving member 202 first drives the suction head assembly 201 to approach the positioning mechanism 10, such that the collector disk on the suction head assembly 201 abuts against one end of the cylindrical cell, and then welds the collector disk and the cylindrical cell; after welding is completed, the fourth driving member 202 drives the suction head assembly 201 to be away from the positioning mechanism 10, and the positioning mechanism 10 is then conveyed by the conveying mechanism 20 to the unloading station "c" for unloading.

In the present embodiment, a pair of suction head assembly 201 and fourth driving member 202 are provided, so that both sides of the workpiece 300 may be welded at the same time, which is beneficial to improving the processing efficiency on the one hand, and on that other hand is beneficial to improving the processing precision and further improving the yield.

Optionally, the fourth driving member 202 may include, but is not limited to, an electric cylinder, which may be mounted on the mounting plate 206.

In some specific implementations of the present disclosure, the suction head assembly 201 comprises a mounting block 2011 and a pressure head 2012. The mounting block 2011 is connected to the fourth driving member 202. The pressure head 2012 is provided on the mounting block 2011 and configured to suck the to-be-welded part and press it against an end of the workpiece 300.

In other words, the suction head assembly 201 of the present embodiment is mainly composed of the mounting block 2011 and the pressure head 2012. Here, the mounting block 2011 may be connected to the fourth driving member 202, the pressure head 2012 is provided on one side of the mounting block 2011 facing towards the positioning mechanism 10, one side of the pressure head 2012 may face towards the positioning mechanism 10, and the pressure head 2012 may suck the collector disk and press the collector disk against the end face of the cylindrical cell.

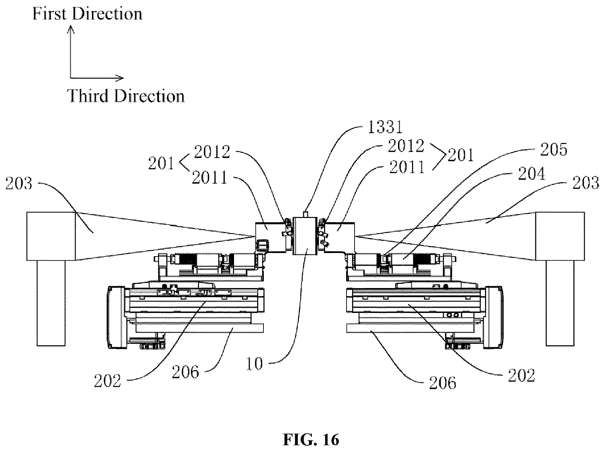

According to some alternative embodiments of the present disclosure, as shown in FIG. 16, the welding device 200 further includes two laser assemblies 203, which are provided on both sides of the conveying mechanism 20 and are spaced apart along the width direction of the conveying mechanism 20. The two suction head assemblies 201 are located between the two laser assemblies 203, each of which is configured to weld the to-be-welded part and the workpiece 300.

When the two suction head assemblies 201 press the collector disk against both ends of the cylindrical cell, the two laser assemblies 203 can then weld the collector disk to the cylindrical cell by laser welding. The laser welding possesses advantages such as shallow melt depth, minimal deformation, high weld seam quality, and high precision.

According to other embodiments of the present disclosure, the welding device 200 further includes a cushioning assembly 204 and a pressure sensor 205. The cushioning assembly 204 is connected between one suction head assembly and one fourth driving member 202 and configured to cushion one suction head assembly 201. The pressure sensor 205 is connected between one cushioning assembly 204 and one suction head assembly 201 and configured to detect a pressure received by one suction head assembly 201.

Specifically, the cushioning assembly 204 is provided between the suction head assembly 201 and the fourth driving member 202. When the fourth driving member 202 drives the suction head assembly 201 to abut against the cylindrical cell, a part of the pressure applied by the fourth driving member 202 may be absorbed by the cushioning assembly 204, so as to reduce the pressure exerted by the suction head assembly 201 on the cylindrical cell, thereby preventing excessive pressure from damaging the collector disk or the battery.

Optionally, the cushioning assembly 204 may include one or more springs.

Additionally, the pressure sensor 205 may be provided between the suction head assembly 201 and the fourth driving member 202 for measuring the pressure experienced by the suction head, so as to control the pressure exerted by the suction head assembly 201 on the cylindrical cell, thereby preventing excessive pressure from damaging the collector disk or the battery.

Although some specific embodiments of the present disclosure have been described in detail through examples, those skilled in the art should understand that the above examples are for illustration only and are not intended to limit the scope of the present disclosure. Those skilled in the art should understand that the above embodiments can be modified without departing from the scope and spirit of the present disclosure. The scope of the present disclosure is defined by the accompanying claims.

## Claims

1. A conveying device having a loading station and a processing station, the conveying device comprising:
a positioning mechanism defining an accommodating space suitable for accommodating a workpiece and provided with a movable driving part;
a conveying mechanism configured to convey the positioning mechanism from the loading station to the processing station; and
a driving mechanism at least provided at the loading station and configured to drive the driving part so that the positioning mechanism positions or unlocks the workpiece in the accommodating space.

2. The conveying device according to claim 1, wherein the driving part protrudes from a surface of the positioning mechanism.

3. The conveying device according to claim 1 or 2, wherein the driving part is movable along a first direction, and the driving mechanism comprises:
a first pushrod abutting against the driving part; and
a first driving member connected to the first pushrod for driving the first pushrod to push the driving part along the first direction so as to unlock the positioning mechanism.

4. The conveying device according to claim 3, wherein at the loading station, a plurality of positioning mechanisms on the conveying mechanism are arranged along a second direction, there are provided a plurality of driving mechanisms, the plurality of driving mechanisms are arranged along the second direction, and the first direction is perpendicular to the second direction.

5. The conveying device according to claim 4, wherein the accommodating space extends through the positioning mechanism along a width direction of the conveying mechanism, and the first direction, the second direction, and the width direction of the conveying mechanism are mutually perpendicular.

6. The conveying device according to any one of claims 1 to 5, further comprising:
a loading support provided at the loading station and located on one side of the conveying mechanism, configured to bear the workpiece; and
a loading mechanism provided at the loading station and located on one side of the loading support distal to the conveying mechanism, configured to push the workpiece on the loading support into the accommodating space.

7. The conveying device according to claim 6, wherein the loading mechanism comprises:
a second pushrod extending along a width direction of the conveying mechanism, with one end of the second pushrod proximate to the accommodating space configured to push the workpiece; and
a second driving member connected to the other end of the second pushrod distal to the accommodating space, to drive the second pushrod to move along the width direction of the conveying mechanism.

8. The conveying device according to any one of claims 1 to 7, wherein the conveying device also has an unloading station, which is arranged downstream of the processing station and is provided with the driving mechanism, and further comprises:
an unloading support provided at the unloading station and located on one side of the conveying mechanism; and
an unloading mechanism provided at the unloading station, located on the other side of the conveying mechanism, and configured to push the workpiece in the accommodating space towards the unloading support.

9. The conveying device according to claim 8, wherein the unloading mechanism comprises:
a third pushrod extending along a width direction of the conveying mechanism, with one end of the third pushrod facing towards the accommodating space configured to push the workpiece; and
a third driving member connected to the other end of the third pushrod, to drive the third pushrod to move along the width direction of the conveying mechanism.

10. The conveying device according to any one of claims 1 to 9, wherein the conveying mechanism comprises:
a conveyor line extending through the loading station and the processing station, and configured to convey the positioning mechanism from the loading station to the processing station; and
a plurality of carriers provided on the conveyor line and connected to the positioning mechanism, with the conveyor line configured to convey the carriers from the loading station to the processing station.

11. The conveying device according to claim 10, wherein the conveyor line is annular, and is configured to reciprocate the positioning mechanism between the loading station and the processing station.

12. The conveying device according to claim 10 or 11, wherein the conveyor line is a magnetic levitation conveyor line or a belt conveyor line.

13. The conveying device according to any one of claims 10 to 12, further comprising:
a limiting mechanism provided at the loading station and configured to limit the carriers in the width direction of the conveying mechanism.

14. The conveying device according to claim 13, wherein each of the carriers has limiting surfaces on both ends thereof in the width direction of the conveying mechanism, and the limiting mechanism comprises:
two brackets provided at the loading station, with the carriers located between the two brackets; and
a plurality of rollers arranged on the two brackets along an extension direction of the conveyor line, each of the limiting surfaces being connected to at least one roller to limit the carriers.

15. A welding apparatus, comprising:
the conveying device according to any one of claims 1 to 14; and
a welding device provided at the processing station and configured to weld the workpiece in the positioning mechanism.

16. The welding apparatus according to claim 15, wherein the welding device comprises:
two suction head assemblies provided on both sides of the conveying mechanism and spaced apart along an axial direction of the accommodating space, each of the suction head assemblies being configured to suck a to-be-welded part; and
two fourth driving members connected to the two suction head assemblies in one-to-one correspondence, each of the fourth driving members being configured to drive a corresponding suction head assembly to move along an axial direction of the accommodating space.

17. The welding apparatus according to claim 16, wherein the suction head assembly comprises:
a mounting block connected to the fourth driving member; and
a pressure head provided on the mounting block and configured to suck the to-be-welded part and press it against an end of the workpiece.

18. The welding apparatus according to claim 16 or 17, wherein the welding device further comprises:
two laser assemblies provided on both sides of the conveying mechanism and spaced apart along the axial direction of the accommodating space, with the two suction head assemblies located between the two laser assemblies, each of the laser assembly configured to weld the to-be-welded part and the workpiece.

19. The welding apparatus according to any one of claims 16 to 18, wherein the welding device further comprises:
a cushioning assembly connected between one suction head assembly and one fourth driving member and configured to cushion one suction head assembly; and
a pressure sensor connected between one cushioning assembly and one suction head assembly and configured to detect a pressure received by one suction head assembly..
